# EUROPEAN PATENT APPLICATION

(11) **EP 1 524 837 A1**
(43) Date of publication of application: **20.04.2005**
(21) Application number: 04255917.9
(22) Date of filing: 28.09.2004
(51) Int. Cl.: H04N 1/00

(54) **Image processing apparatus**

(30) Priority: 16.10.2003 JP 2003356631
(71) Applicant: CANON KABUSHIKI KAISHA, Tokyo (JP)
(72) Inventor: Nakajima, Hirofumi, Ohta-ku Tokyo (JP)
(74) Representative: Beresford, Keith Denis Lewis

(57) **Abstract**

An image processing apparatus of the present invention includes a recording medium detecting section for detecting the size of a recording medium, a recording picture deciding section for deciding the number of pictures of a representative image to be selected from a series of moving images recorded on the recording medium, in accordance with the size of the detected recording medium and selecting the representative image of the decided number of pictures from a series of the moving images, and a control section for extracting the representative image data representing the selected representative image from the moving image data and transmitting the extracted representative image data to an image forming apparatus so that the representative image of the decided number of pictures is recorded on the recording medium.

## Description

### BACKGROUND OF THE INVENTION

### Field of the Invention

The present invention relates to an image processing apparatus for selecting and outputting a representative image of moving image data.

### Related Background Art

A system has been familiar to us in recent years, which directly connects a digital video camera or digital camera with a printer and prints an image photographed or recorded by the video camera or digital camera, and the system like this is disclosed, for example, in Japanese Patent Application Laid-Open Nos. H09-130591 and 2000-261741.

However, when extracting some pictures of a representative image representing the content of a series of photographed moving image data from this moving image data and printing them, there is a problem that it may not possible depending on the size of the recording sheet or the number of pictures of the representative image to record the pictures on one recording sheet.

### SUMMARY OF THE INVENTION

It is an object of the present invention to solve the above problem.

It is another problem of the present invention to make it possible to easily record a representative image representing the content of a series of moving images on one recording body.

To achieve the above objects, according to an embodiment of the present invention, an apparatus of the present invention for selecting a representative image from moving images of the moving image data stored in a storage device and outputting the image data representing the representative image to an image forming apparatus in order to form the representative image on a recording medium, comprises recording-medium detecting means for detecting the size of a recording medium, recording-picture deciding means for deciding the number of pictures of the representative image to be selected out of a series of moving images, in accordance with the size of the recording medium detected by the recording-medium detecting means and selecting the representative image of the decided number of pictures out of a series of moving images, communicating means and control means for extracting the representative image data representing the representative image selected by the recording-picture deciding means from the moving image data and transmitting the extracted representative image data to the image forming apparatus by the communicating means so that the representative image of the decided number of pictures is recorded on one recording medium. Purposes and features other than the above mentioned of the present invention will become more apparent from the detailed description of modes of the present invention referring to the accompanying drawings.

### BRIEF DESCRIPTION OF THE DRAWINGS

FIG. 1 is a diagram showing a configuration of a system to which the present invention is applied;
FIG. 2 is a diagram showing a configuration of a video camera to which the present invention is applied;
FIG. 3 is a diagram showing an image layout on a recording sheet;
FIG. 4 is a diagram showing the extraction processing of a representative image; and
FIG. 5 is a diagram showing the extraction processing of a representative image.

### DETAILED DESCRIPTION OF THE PREFERRED EMBODIMENTS

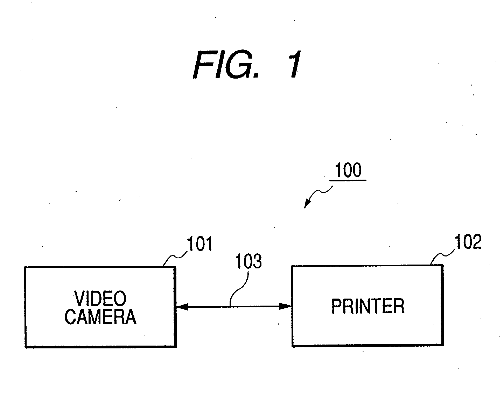

FIG. 1 is a diagram showing a configuration of a print system 100 to which the present invention is applied.

In FIG. 1, reference numeral 101 denotes a video camera to which the present invention is applied and 102 denotes a printer. The video camera 101 and the printer 102 respectively have a USB board and are connected to each other by a USB cable 103. Moreover, image data is transmitted from the video camera 101 to the printer 102 through the USB cable and printed. Furthermore, the printer 102 functions as a USB host.

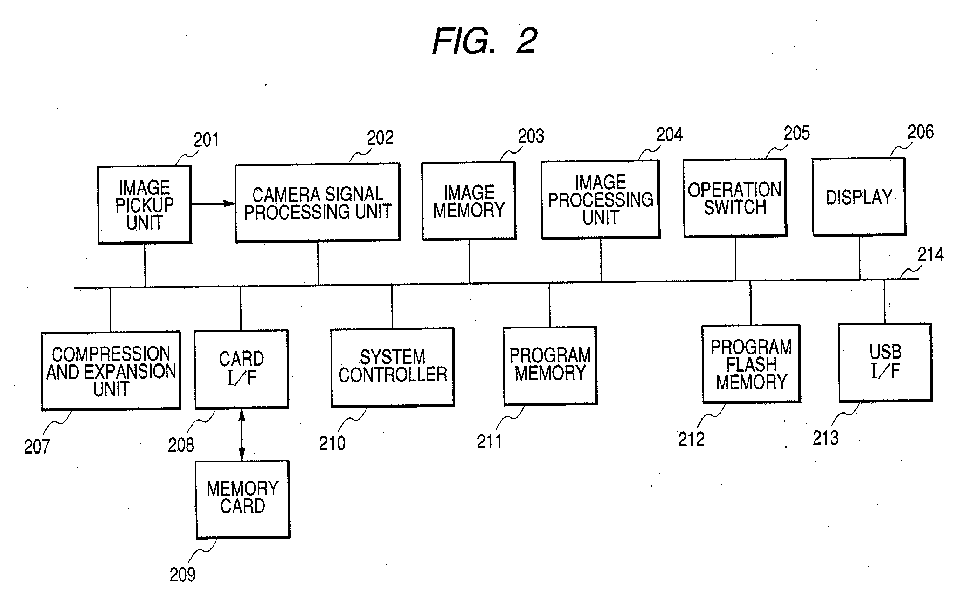

FIG. 2 is a diagram showing a configuration of the video camera 101 in FIG. 1.

In FIG. 2, a program stored in a program flash memory 212 is loaded into a program memory 211 at the time of start-up and a system controller 210 controls various operations in accordance with the program in the program memory 211. Moreover, the video camera in FIG. 2 can transmit/receive various data values through a bus 214.

First, the normal recording operation of the video camera in FIG. 2 is described below.

When a user designates start of recording by operating an operation switch 205, moving image data obtained from an image pickup unit 201 is sent to a camera signal processing unit 202, converted into a digital signal, and then subjected to conventional processing. A camera signal processing unit 202 outputs digital moving image data to a compression and expansion unit 207 and the compression and expansion unit 207 encodes the moving image data in accordance with the conventional encoding method such as MPEG and outputs it to an image memory 203.

The moving image data temporarily stored in the image memory 203 is read out by a card I/F 208 and recorded in a memory card 209. Moreover, when a designation for recording stop is output from the operation switch 205, recording the moving image data. into the memory card 209 is stopped. This embodiment records, in the memory card 209 as one file, a series of moving image data photographed between a designation for recording start and a designation for recording stop.

Then, the processing for reproduction is described below.

When the moving image data to be reproduced is designated by the operation switch 205 and a designation for reproduction start is output, the system controller 210 controls the card I/F 208 to start reproduction of the moving image data designated by the memory card 209. The moving image data reproduced by the card I/F 208 is temporarily stored in the image memory 203 and then, subjected to size processing by the image processing unit 204, and converted into a conformation suitable for display and displayed on a display 206.

Subsequently, the data in the moving image file is entirely reproduced and the processing is completed.

Then, the processing for connecting the video camera 101 and the printer 102 as shown in FIG. 1 and printing the image data recorded in the memory card 209 is described below.

When a user connects a USB I/F 213 of the video camera 101 with a USB I/F of the printer 102 by the USB cable 103 while reproduction of the moving image data from the memory card 209 is stopped, the system controller 210 recognizes that the video camera is connected with the printer, then controls the image processing unit 204 to display an icon representing a printing ready state on the display 206.

When the user reproduces a moving image file including an image to be printed under the above state and designates the image to be printed, the system controller 210 sends the designated image data to the image processing unit 204 to be subjected to color conversion and aperture processing in accordance with a designated print format, then transmits the data to the printer 102 through the USB I/F 213. The printer 201 prints the image according to the image data thus transmitted on a recording sheet.

Then, an automatic moving image printing mode is described below, which automatically prints on one recording sheet to lay out a plurality of representative images representing contents of the moving image data recorded in the memory card 209.

As described above, when an automatic moving-image printing mode is designated by the operation switch 205 while the video camera 101 is connected with the printer 102 by the USB cable 103, the system controller 210 inquires of the printer 102 about the size of a recording sheet currently set to the printer 102 through the USB I/F 213 to obtain the size information of the recording sheet. Then, the controller 210 decides the number of images (maximum value) which can be printed on a printing sheet, and the layout of the images in accordance with the information on the detected sheet size and the then size of images per picture.

This embodiment calculates the number of pictures which can be recorded in one sheet, so that an optimum layout is obtained in accordance with the size of a recording sheet by assuming that the size of an image per picture is a predetermined size such as Y mm in longitudinal direction and X mm in transverse direction.

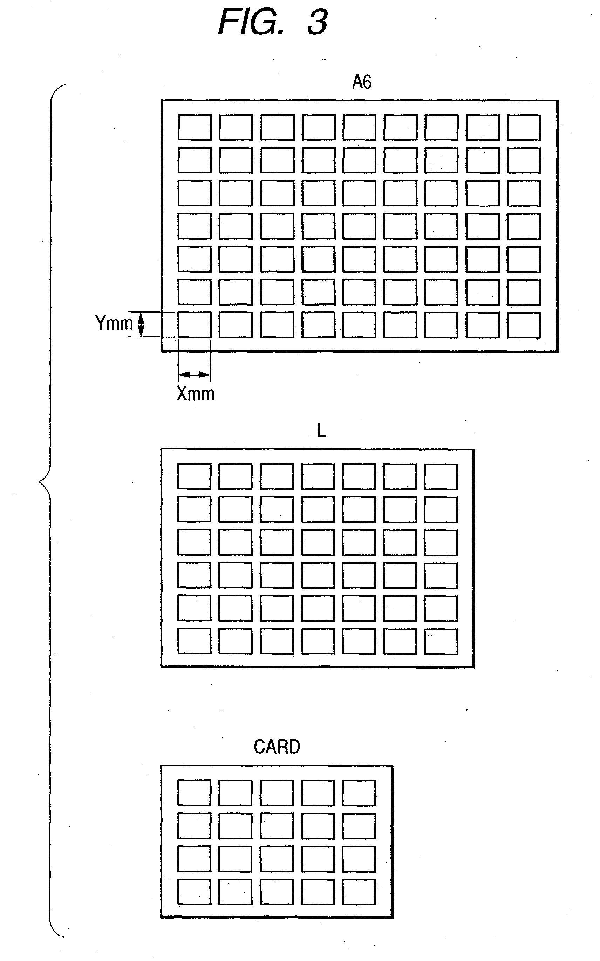

FIG. 3 shows a state of the layout of images when a recording sheet has a size A6, size L, and card size.

In FIG. 3, when the recording sheet is size A6, images of the total of 63 pictures such as 7 pictures in the longitudinal direction and 9 pictures in the transverse direction are arranged on one recording sheet. Moreover, when the recording sheet is size L, images of the total of 42 pictures such as 6 pictures in the longitudinal direction and 7 pictures in the transverse direction are arranged on one recording sheet, and in case of the card size, images of the total of 20 pictures such as 4 pictures in the longitudinal direction and 5 pictures in the transverse direction are arranged on one recording sheet.

Thus, after deciding the number of pictures of images to be recorded on one recording sheet and the layout in accordance with the size of the recording sheet, the system controller 210 controls the card I/F 208 to extract, as a representing image data, image data for the number of pictures which can be recorded on one recording sheet, from the moving image data designated by a user.

Moreover, in this case, the user optionally designates an extracting range of the image data to be printed among the designated moving image data.

Specifically, the system controller 210 detects the information of the reproduction time (total number of frames) of the moving image data from a header of the moving image file recorded in the memory card 209 and moreover detects the number of frames designated as the range by the user, from the information. Then, the controller 210 decides pictures to be printed at substantially equal intervals from a series of moving image data in accordance with the number of frames of the detected moving image data and the number of pictures to be printed.

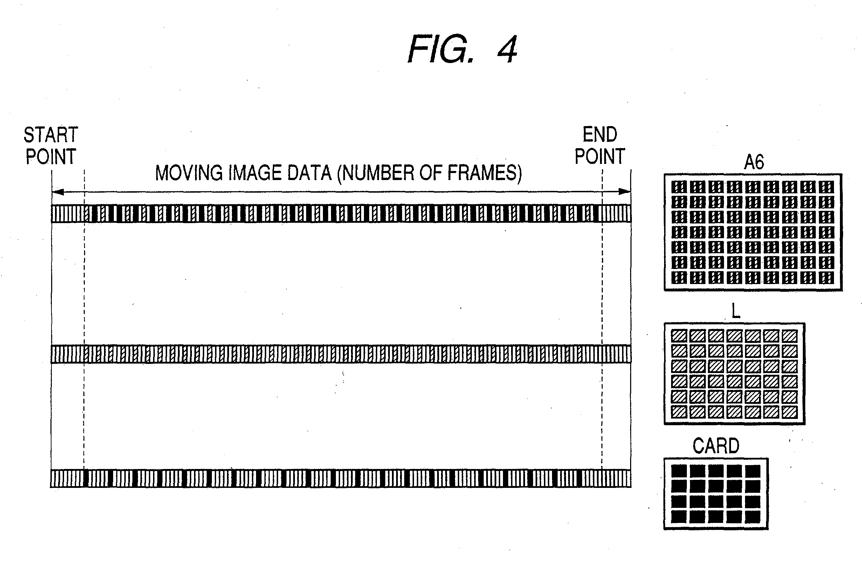

FIG. 4 shows the above state.

In FIG. 4, a hatched picture (frame) is selected as a printing picture from the period between the start point and end point designated by the user in a series of moving image data.

Then, the system controller 210 controls the card I/F 208 to reproduce moving image data from the memory card 209. Then, the controller 210 expands the reproduced moving image data by the compression and expansion unit 207 and then, extracts the image data of the printing picture selected as described above to send the data to the image processing unit 204, reduces the size of the data in accordance with the image size on a recording sheet, and transmits the data to the printer 102 through the USB I/F 213 in accordance with the designation of the automatic moving image printing mode.

The printer 102 arranges and prints a plurality of still images thus transmitted on a recording sheet as shown in FIG. 3.

Thus, according to this embodiment, by deciding the number of pictures allowing an image having a predetermined size to be printed on one recording sheet and automatically extracting as representative image data, the image data of the decided number of pictures from among moving image data, it is possible to easily record an image of a plurality of pictures representing the content of a series of moving image data on one recording sheet.

That is, because of extracting as a representative image only the number of pictures which can be printed on one recording sheet, even if the size of the recording sheet becomes small to the size L or card size, still images representing the content of moving image data are not recorded on a plurality of recording sheets as shown in FIG. 3.

This embodiment extracts an image to be printed from the period between the start point and end point designated by a user from among a series of moving image data. However, it is also possible to use a configuration for extracting an image to be printed all over period of moving image data without designation by a user.

Moreover, this embodiment extracts images to be printed at equal intervals from moving image data. However, it is also possible to use a configuration for extracting an image to be printed, by using the metadata added to moving image data at the time of photographing.

Furthermore, the size of a picture to be printed in the automatic moving image printing mode can be optionally changed by a user. When the size of a picture is changed by a user, the system controller 210 calculates the number of pictures to be printed in accordance with the changed size and the size of a recording sheet.

Moreover, this embodiment extracts the image data of the number of pictures (maximum value) calculated by the system controller 210 from moving image data. However, a user can optionally change the number of pictures to be printed on one recording sheet to the number which does not exceed the maximum value.

Furthermore, when the period between the start point and end point designated by a user is short and the number of pictures is smaller than the maximum value which can be recorded on one sheet, all the pictures included in this period are recorded as representative images.

Furthermore, though this embodiment uses a memory card as a recording medium, it is also possible to use other recording medium such as a disk medium. Furthermore, in the case of this embodiment, the video camera 101 and printer 102 are connected each other through a USB cable by a USB I/F. However, it is also possible to use a communication interface such as a radio interface other than the USE I/F.

Then, second embodiment is described below.

In the case of the above-described embodiment, when recording a representative image of moving image data on one recording sheet, the number of pictures which can be recorded is decided in accordance with the size of a recording sheet by assuming that the size of the representative image for one picture is a predetermined size.

In the case of this embodiment, however, the size of one representative picture is decided in accordance with the size of a recording sheet by assuming that the number of pictures to be recorded on one recording sheet is the predetermined number of pictures.

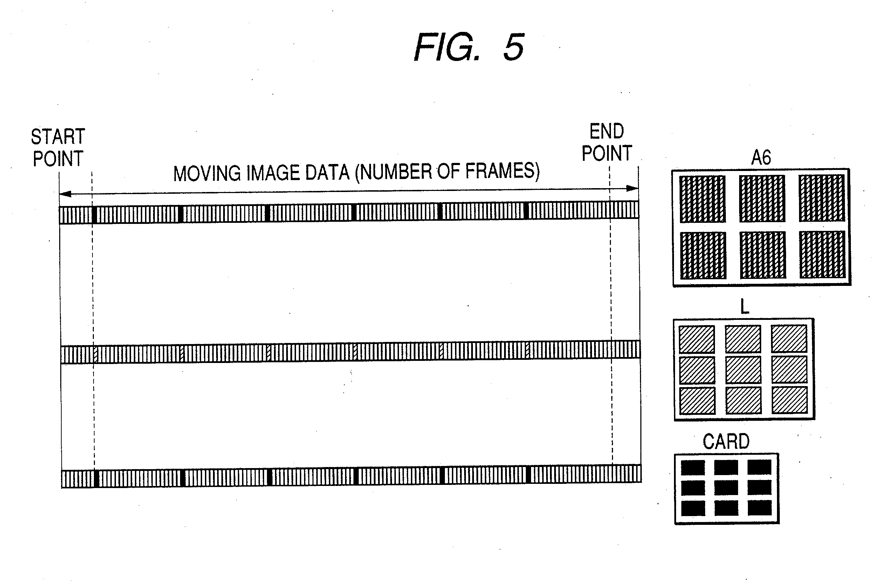

That is, as shown in FIG. 5, when assuming that the number of pictures for one representative picture is 6 pictures, the image size for one picture is changed in accordance with the size of the recording sheet so that the picture size becomes maximum not exceeding the size of a recording sheet.

Specifically, similarly to the case of the above-described embodiment, when a designation for an automatic moving image printing mode is output from the operation switch 205 while the video camera 101 and printer 102 are connected by the USB cable 103, the system controller 210 inquires the printer 102 about the size of a recording sheet currently set to the printer 102 through the USB I/F.213 to obtain the size information on the recording sheet. Then, the controller 210 decides the size of one representative picture and the layout of images in accordance with the detected sheet-size information and the designated printing number of pictures per recording sheet.

Then, the controller 210 extracts the designated number of representative image data values at equal intervals from the moving image data reproduced from the memory card 209 and sends the data values to the image processing unit 204.

Moreover, the controller 210 controls the image processing unit 204 to subject the representative image data extracted in accordance with the size of previously-decided one representative image picture, to reduction processing and sends the data to the printer 102 through the USB I/F 213.

Thus, according to this embodiment, it is possible to print a representative image of a number of pictures, designated from among a moving image, at an optimum size corresponding to the size of a recording sheet when recording the representative image on one recording sheet.

In this embodiment, a user can optionally change the number of pictures of a representative image to be recorded in one recording sheet. In this case, the system controller 210 decides the size of one representative image picture in accordance with the changed number of pictures and the size of the recording sheet.

Moreover, it is needless to say that the present invention is achieved when the storage medium having stored the program code of the software for realizing the function of each embodiment described above is supplied to a system or apparatus and the computer (or CPU or MPU) of the system or apparatus reads and executes the program code stored in the recording medium.

In this case, the program code read from the storing medium realizes the function of each of the above-described embodiments and the storing medium storing the program code constitutes the present invention. It is possible to use a floppy disk, hard disk, optical disk, magneto-optical disk, CD-ROM, CD-R, magnetic tape, nonvolatile memory card, or ROM as a storing medium for supplying the program code.

Moreover, by executing the program code read by the computer, it is possible to realize the function of each of the above-described embodiments. It is needless to say that it is included in the present invention that an OS working on the computer performs a part or the whole of actual processing in accordance with a designation by the program code and the function of each of the above-described embodiments is realized by the processing.

Furthermore, it is needless to say that it is included in the present invention that after the program code read from the storing medium is written in a memory provided for a function extension port inserted into the computer or a function extension unit connected to the computer, the CPU provided for the function extension port or function extension unit performs a part or the whole of actual processing in accordance with a designation by the program code and the function of each of the above-described embodiments is realized by the processing.

Many widely different embodiments of the present invention may be constructed without departing from the spirit and scope of the present invention. It should be understood that the present invention is not limited to the specific embodiments described in the specification, except as defined in the appended claims.

## Claims

1. An apparatus for selecting a representative image from moving images relating to the moving image data stored in a storage device and outputting the image data representing the representative image to an image forming apparatus in order to form the representative image on a recording medium, comprising:
recording medium detecting means for detecting the size of the recording medium;
recording picture deciding means for deciding the number of pictures of the representative image to be selected from a series of the moving images, in accordance with the size of the recording medium detected by the recording medium detecting means and selecting the representative image of the decided number of pictures from a series of the moving images;
communicating means; and
control means for extracting the representative image data representing the representative image selected by the recording picture deciding means from the moving image data and transmitting the extracted representative image data to the image forming apparatus by the communicating means so that the representative image of the decided number of pictures is recorded on the recording medium.

2. An apparatus according to claim 1, wherein
the size of the representative image to be recorded for one picture is a predetermined size.

3. An apparatus according to claim 1, further comprising:
setting means of optionally setting the size of the representative image for one picture to be recorded, wherein
the recording picture deciding means decides the number of pictures of the representative image to be selected from the series of moving images, in accordance with the size of one picture set by the setting means and the size of the recording medium.

4. An apparatus according to claim 1, wherein
the recording picture deciding means further decides the layout of the representative image on the recording medium and the control means further transmits a control signal to the image forming apparatus by the transmitting means so as to record the representative image on the recording medium in accordance with the layout decided by the recording picture deciding means.

5. An apparatus according to claim 1, wherein
the recording picture deciding means selects the representative image at substantial equal intervals from the moving image data representing a series of the moving images.

6. An apparatus according to claim 1, wherein
the recording picture deciding means selects the representative image by using meta-data added to the moving image data representing a series of the moving images.

7. An apparatus according to claim 1, wherein
the recording picture deciding means selects the representative image of the decided number of pictures from the moving image data included in an optionally designated period among a series of the moving images.

8. An apparatus according to claim 1, further comprising:
reproducing means for reproducing the moving image data from the recording medium.

9. An apparatus according to claim 1, further comprising:
converting means for processing the representative image data extracted from the moving image data to convert the data into a conformation suited to record the data on the recording medium.

10. An apparatus according to claim 9, wherein
the converting means performs reduction processing on the representative image data in accordance with the size of the representative image to be recorded on the recording medium.

11. An apparatus according to claim 1, wherein
the recording medium detecting means detects the size of the recording medium in accordance with the size information indicating the size of the recording medium, received from the image forming apparatus through the communicating means.

12. An apparatus according to claim 1, wherein
the communicating means is connected with the image forming apparatus through a cable.

13. An apparatus according to claim 1, wherein
the recording picture deciding means detects the number of pictures which can be recorded on the recording medium, in accordance with the size of the recording medium detected by the recording medium detecting means and decides the number of pictures which can be recorded, as the number of pictures of the representative image.

14. A system for selecting a representative image from moving image data stored in a storage device and recording the representative image on the recording medium, comprising:
an image processing apparatus comprising:
recording medium detecting means for detecting the size of the recording medium;
recording picture deciding means for deciding the number of pictures of the representative image to be selected from a series of the moving images, in accordance with the size of a recording medium detected by the recording medium detecting means and selecting the representative image of the decided number of pictures from a series of the moving images;
communicating means; and
control means for extracting the representative image data representing the representative image selected by the selecting means from the moving image data and transmitting the extracted representative image data to an image forming apparatus by the communicating means; and
an image forming device for receiving the representative image data transmitted from the communicating means and recording a representative image of the decided number of pictures on the recording medium on the basis of the received representative image data.

15. An apparatus for selecting a representative image from moving images relating to the moving image data stored in a storage device and outputting image data representing the representative image to an image forming apparatus in order to record the representative image on the recording medium, comprising:
designating means for designating the number of pictures of the representative image to be selected from a series of the moving images;
selecting means for selecting representative image data representing the representative image of the number of pictures designated by the designating means, from the moving image data representing a series of the moving images;
recording medium detecting means for detecting the size of the recording medium;
recording picture deciding means for deciding the size of the representative image of one picture to be recorded on the recording medium, in accordance with the size of the recording medium detected by the recording medium detecting means and the number of pictures designated by the designating means;
image processing means for extracting the representative image data representing a representative image selected by the selecting means from the moving image data and changing the size of the extracted representative image data in accordance with the size decided by the recording picture deciding mans; and
communicating means for transmitting the image data whose size is changed by the image processing means, to the image forming apparatus so that the representative image of the designated number of pictures is recorded on the recording medium.

16. A method for selecting a representative image from the moving images relating to moving image data stored in a storage device and outputting the image data representing the representative image to an image forming apparatus in order to record the representative image on a recording medium, comprising:
a recording medium detecting step of detecting the size of the recording medium;
a recording picture deciding step of deciding the number of pictures of the representative image to be selected from a series of the moving images, in accordance with the size of the recording medium detected in the recording medium detecting step and selecting the representative image of the decided number of pictures from a series of the moving images;
a communicating step; and
a control step of extracting the representative image data representing the representative image selected in the recording picture deciding step, from the moving image data and transmitting the extracted representative image data to the image forming apparatus in the communicating step so that the representative image of the decided number of pictures is recorded on the recording medium.

17. A method and apparatus for selecting a representative image from the moving images relating to moving image data stored in a storage device and outputting the image data representing the representative image to an image forming apparatus in order to record the representative image on a recording medium, comprising:
a designating step of designating the number of pictures of the representative image to be selected from a series of the moving images;
a selecting step of selecting the representative image data representing the representative image of the number of pictures designated in the designating step, from the moving image data representing a series of the moving images;
a recording medium detecting step of detecting the size of the recording medium;
a recording picture deciding step of deciding the size of the representative image of one picture to be recorded on the recording medium, in accordance with the size of the recording medium detected in the recording medium detecting step and the number of pictures designated in the designating step;
an image processing step of extracting the representative image data representing the representative image selected in the selecting step from the moving image data and changing the size of the extracted representative image data in accordance with the size decided in the recording picture deciding step; and
a communicating step of transmitting the representative image data whose size is changed in the image processing step to the image forming apparatus so that the representative image of the designated number of pictures is recorded on the recording medium.

18. A method of controlling an apparatus for recording a moving image to output selected still images for printing, comprising selecting a number of sample images to be extracted from the moving image such that the number of sample images is adapted to be equal to the maximum number of sample images when printed with a predetermined size which can be accommodated on a single sheet of printing medium.

19. A computer program comprising processor implementable instructions for controlling an apparatus to perform all of the steps of a method as claimed in any one of claims 16 to 18.

20. A storage medium storing processor implementable instructions for controlling an apparatus to perform all of the steps of a method as claimed in any one of claims 16 to 18.
